# FASCICULE DE BREVET EUROPEEN

(11) **EP 1 956 191 B1**
(45) Date de publication et mention de la délivrance du brevet: **11.04.2012**
(21) Numéro de dépôt: 08101311.2
(22) Date de dépôt: 06.02.2008
(51) Int. Cl.: F01D 1/26, F02C 3/067, F02K 3/072

(54) **Turbine à gaz à turbines HP et BP contra-rotatives**
Gasturbine mit gegendrehenden HD- und ND-Turbinen
Gas turbine with HP and LP counter-rotating turbines

(30) Priorité: 07.02.2007 FR 0753105
(43) Date de publication de la demande: 13.08.2008
(73) Titulaire: SNECMA, 75015 Paris (FR)
(72) Inventeur: Guimbard, Jean-Michel, 77930, Cely en Biere (FR); Martet, Renaud, 91120, Palaiseau (FR); Schwartz, Eric, 77240, Seine Port (FR)
(74) Mandataire: Joly, Jean-Jacques

(56) Documents cités:
- EP-A- 1 731 716
- EP-A1- 0 631 041

## Description

### Arrière-plan de l'invention

L'invention concerne une turbine à gaz ayant des turbines haute-pression (HP) et basse-pression (BP) contra-rotatives, c'est-à-dire avec des sens de rotation opposés entre la ou chaque roue mobile de turbine HP et les roues mobiles de turbine BP. Le domaine d'application de l'invention est plus particulièrement celui des moteurs aéronautiques.

L'invention n'est pas limitée à des turbines à deux corps HP, BP. Elle peut aussi être appliquée à des turbines à plus de deux corps, les termes turbine haute pression (HP) et turbine basse pression (BP) désignant alors deux turbines de deux corps consécutifs dans le sens d'écoulement de flux dans la turbine à gaz.

L'utilisation de turbines HP et BP contra-rotatives est avantageuse en ce qu'il existe un moindre besoin de redressement de flux en sortie de turbine HP, donc une moindre perte aérodynamique sur le distributeur d'entrée de turbine BP. La performance de la fonction turbine est donc améliorée.

Pour des raisons de tenue structurale, un carter intermédiaire, ou carter inter-turbine, peut être interposé entre les turbines HP et BP logées dans leurs carters respectifs. Le carter intermédiaire comprend des parois interne et externe définissant la veine de circulation du flux entre les turbines HP et BP, et des bras s'étendant entre les parois interne et externe.

Une telle configuration semblable à celle décrite dans le document EP 1 731 716 A est représentée de façon très schématique sur la figure 1. La turbine HP 10 comprend un distributeur 12 recevant le flux primaire issu de la chambre de combustion et le redressant pour l'appliquer sur une roue mobile 16 tournant dans un sens (flèche F1). La turbine BP 20 comprend une pluralité d'étages chacun avec un distributeur 22₁, 22₂, .... 22ₙ et une roue mobile 26₁, 26₂, ... 26ₙ, les roues mobiles tournant dans un sens opposé (flèche F2) à celui de la roue 16. Un carter inter-turbine 30 est interposé entre les turbines 10 et 20 avec des bras 32 s'étendant dans le passage du flux, les bras 32 étant carénés afin de minimiser les pertes aérodynamiques. Toutefois, la présence du carter inter-turbine est génératrice de pertes de pressions, faisant chuter les performances de l'ensemble de la turbine.

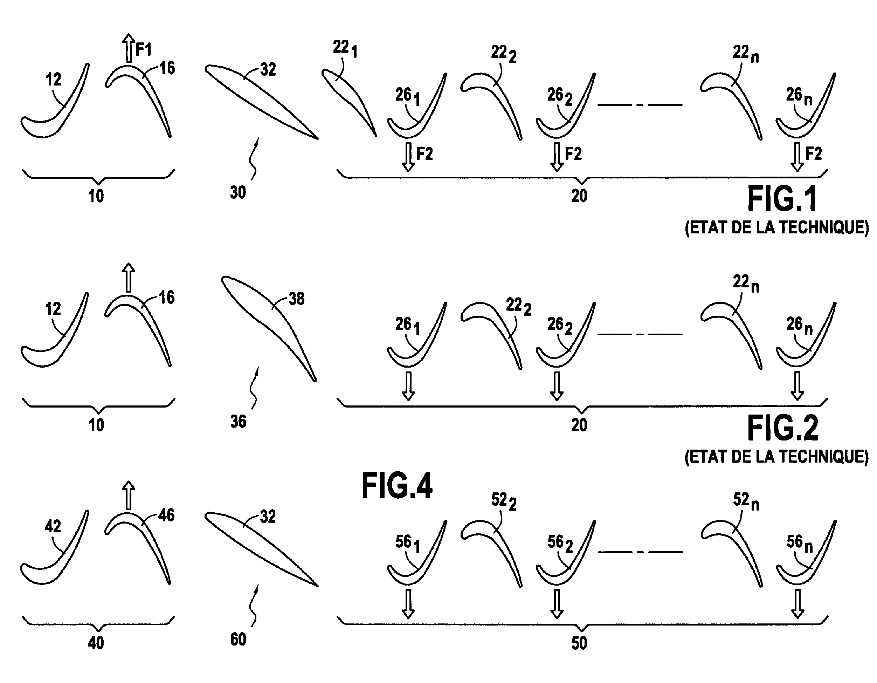

Il a été proposé, comme représenté très schématiquement sur la figure 2, de supprimer le distributeur de l'étage d'entrée de la turbine BP et de conférer une fonction de redresseur au carter inter-turbine 36 (les autres éléments étant semblables à ceux de la figure 1 et portant les mêmes références). On confère alors aux bras 38 du carter inter-turbine un profil de pale de redresseur. On observe toujours toutefois une chute de performance par rapport à une configuration sans carter inter-turbine. En effet, chaque bras est plus contraint géométriquement (longueur de corde et maître couple) et génère donc plus de pertes de pression qu'un distributeur conventionnel de premier étage de turbine BP.

### Objet et résumé de l'invention

L'invention propose de fournir une configuration de turbines HP et BP contra-rotatives avec carter inter-turbine permettant une optimisation de performances aérodynamiques, d'une part, et de masse et coût, d'autre part.

Ce but est atteint grâce à une turbine à gaz selon la revendication 1.

Ainsi, tout en supprimant le distributeur du premier étage de turbine BP, on ne confère qu'un rôle structural, à l'exclusion d'un rôle de redressement de flux, au carter inter-turbine. L'absence de redressement de flux au premier étage de la turbine BP induit certes une dégradation de la distribution de charge sur la turbine BP par rapport aux configurations connues, mais cette dégradation est compensée par le gain lié à la réduction du nombre de pales. En effet, au niveau du carter inter-turbine, les bras n'ayant aucune fonction de redressement de flux, ils pourront être en nombre limité suffisant pour assurer la fonction structurale du carter. De plus, ce type de bras non redresseur génère moins de perte de pression d'un bras à profil redresseur, les phénomènes secondaires étant fortement réduits ainsi que les pertes dues au profil. En outre, la roue mobile du premier étage de turbine BP recevant un flux non redressé aura une moindre déviation à imposer au flux et pourra avoir un nombre de pales réduit. S'ajoute la suppression complète du distributeur d'entrée de turbine BP.

La réduction du nombre de pales se traduit aussi par des diminutions sensibles de masse et de coût.

De préférence, pour avoir un bon bilan de performance, la turbine HP est conçue pour délivrer un flux giratoire dans le carter inter-turbine, la direction générale du flux en sortie de la turbine HP formant par exemple un angle au moins égal à 20° par rapport à la direction axiale de la turbine, au moins pour les points de fonctionnement où la meilleure performance est recherchée.

L'invention vise aussi un moteur à turbine à gaz équipé d'une turbine telle que définie ci-avant.

### Brève description des dessins

L'invention sera mieux comprise à la lecture faite ci-après, à titre indicatif mais non limitatif en référence aux dessins annexés sur lesquels :
- les figures 1 et 2, déjà décrites, illustrent de façon très schématique des configurations connues de turbines HP et BP contra-rotatives ;
- la figure 3 illustre de façon très schématique un moteur à turbine à gaz dans lequel l'invention peut être mise en oeuvre ;
- la figure 4 illustre de façon très schématique une configuration selon l'invention de turbines HP et BP contra-rotatives ; et
- la figure 5 est une vue partielle simplifiée en demi-coupe axiale d'un ensemble turbine HP, carter inter-turbine et turbine BP selon un mode de réalisation de l'invention.

### Description détaillée de modes de réalisation

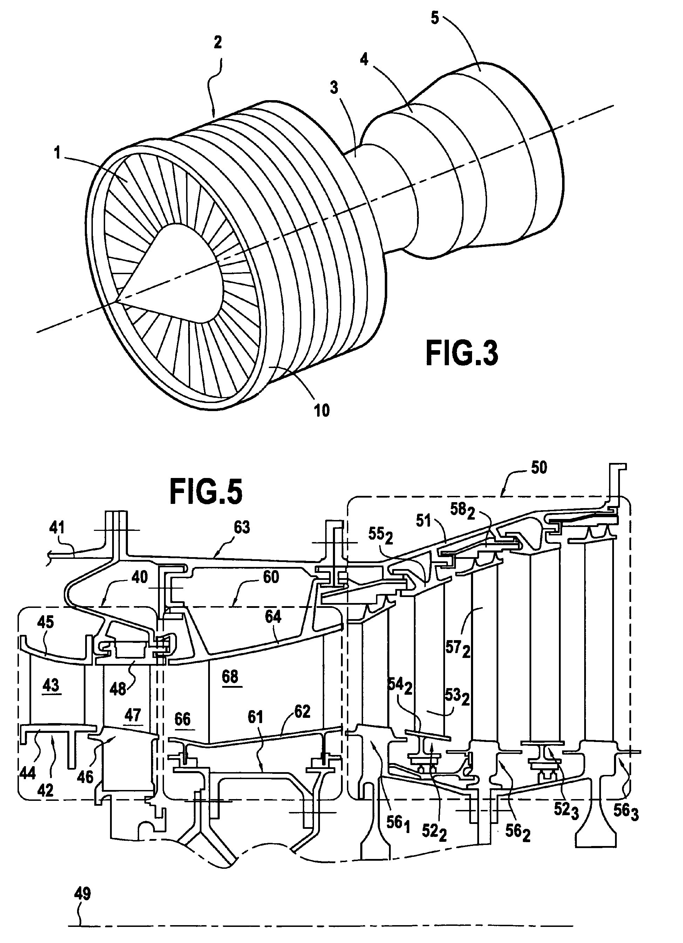

L'invention est particulièrement applicable aux moteurs aéronautiques à turbine à gaz. Un tel moteur, comme montré très schématiquement par la figure 3 comprend, de l'amont vers l'aval dans le sens de l'écoulement du flux gazeux, une soufflante 1 disposée en entrée du moteur, un compresseur 2, une chambre de combustion 3, une turbine haute pression (HP) 4 et une turbine basse-pression (BP) 5. Les turbines HP et BP sont couplées au compresseur et à la soufflante par des arbres coaxiaux.

Des configurations conformes à l'invention d'un ensemble turbine HP, carter inter-turbine et turbine BP sont montrées de façon très schématique par la figure 4 et en demi-coupe axiale partielle par la figure 5.

Dans ces exemples, la turbine HP 40 comprend un étage de turbine unique avec un distributeur d'entrée de turbine 42 recevant le flux gazeux primaire issu de la chambre de combustion (non représentée) et une roue mobile 46 immédiatement en aval de laquelle un flux gazeux est délivré en sortie de la turbine HP. Le distributeur 42 comprend des pales fixes 43 qui s'étendent dans l'espace défini par des plates-formes interne 44 et externe 45, espace formant la veine d'entrée de flux gazeux dans la turbine. La roue mobile 46 comprend des pales 47 mobiles en rotation dans un espace entouré par un anneau de turbine externe 48. La roue mobile 46 est mobile en rotation autour de l'axe 49 de la turbine et est couplée à un arbre de turbine (non représenté).

La turbine BP comprend une pluralité d'étages de turbine. Le premier étage, ou étage le plus en amont, comprend une roue mobile 56₁ non précédée de distributeur d'entrée de turbine BP, tandis que chaque étage suivant comprend un distributeur 52₂, ..., 52ₙ et une roue mobile 56₂, ...., 56ₙ, n étant un nombre entier supérieur à deux, de préférence au moins égal à 3. Dans l'exemple de la figure 5, le nombre d'étages de turbine BP est égal à 3, avec des roues mobiles 56₁, 56₂, 56₃ et des distributeurs 52₂, 52₃. Les roues mobiles de la turbine BP sont mobiles en rotation autour de l'axe 49 dans un sens opposé au sens de rotation de la roue mobile 46, et sont reliées à un arbre de turbine (non représenté). Chaque distributeur de turbine BP, par exemple 52₂, comprend des pales 53₂ qui s'étendent dans l'espace défini par des anneaux de distributeur interne et externe 54₂, 55₂. Chaque roue mobile de turbine BP, par exemple 56₂ comprend des pales 57₂ mobiles en rotation dans un espace entouré par un anneau de turbine externe 58₂.

Le carter inter-turbine 60, ayant seulement une fonction structurale, est inséré entre les turbines HP et BP. Le carter 60 comprend des structures de carter interne et externe 61, 63 qui supportent des parois interne et externe 62, 64 définissant entre elle le passage 66 pour le flux gazeux entre les turbines HP et BP. Des bras structuraux 68 s'étendent à travers le flux dans toute la largeur du passage 66 entre les parois 62 et 64 et sont reliés à celles-ci. Les bras 68 sont carénés pour minimiser les pertes aérodynamiques dans le passage 66 mais ne sont pas profilés pour réaliser une fonction de redressement de flux comme dans le cas de la figure 2. Le nombre de bras pourra donc être limité à un nombre suffisant pour assurer la fonction structurale attendue. On notera que la structure de carter externe 63 est reliée à des structures de carter externes 41, 51 des turbines HP et BP.

Avec une configuration conforme à l'invention, la roue mobile amont 56₁, de la turbine BP est peu chargée. Elle pourra donc être réalisée avec un nombre de pales limité. Pour compenser la faible charge de la roue 56₁, on pourra prévoir une charge plus importante des roues 56₂, 56₃, en comparaison avec une configuration classique avec distributeur en amont de la première roue mobile de turbine BP.

Avantageusement, pour avoir un bon bilan de performance au niveau de la roue 56₁, il est souhaitable d'imposer au flux gazeux issu de la turbine HP une giration relativement importante autour de l'axe 49. De préférence, l'angle entre la direction générale du flux gazeux issu de la turbine HP et l'axe 49, tel qu'imposé par la roue mobile 46, est au moins égal à 20°, par exemple compris entre 20° et 45°.

En dépit de l'absence de distributeur en entrée de turbine BP, donc en présence d'un déséquilibre de charge entre les roues mobiles de la turbine BP, l'économie en termes de masse et de coût sur le nombre de pales permet d'obtenir un bilan de performance globalement positif en comparaison avec l'art antérieur.

## Revendications

1. Turbine à gaz comprenant : une turbine (40) haute pression (HP) ; une turbine (50) basse-pression (BP) ayant une pluralité de roues mobiles (56) alternant avec des distributeurs (52), les roues mobiles de la turbine BP ayant un sens de rotation opposé à celui de la roue mobile de la turbine HP ; et un carter inter-turbine (60) ayant des parois de carter interne (62) et externe (64) définissant un passage de flux entre les turbines HP et BP et des bras (68) s'étendant dans le passage entre les parois de carter interne et externe,
**caractérisée en ce que** les bras (68) du carter inter-turbine sont carénés et le carter inter-turbine (60) fait communiquer la sortie de la turbine HP (40) directement avec la première roue mobile (56) de la turbine BP (50), de sorte que le flux n'est pas redressé entre la sortie de la turbine HP (40) et la première roue mobile (56) de la turbine BP (50).

2. Turbine à gaz selon la revendication 1, **caractérisée en ce que** la turbine HP (40) est conçue pour délivrer un flux giratoire dans le carter inter-turbine (60).

3. Turbine à gaz selon la revendication 2, **caractérisée en ce que** la direction générale du flux en sortie de la turbine HP (40) forme un angle au moins égal à 20° par rapport à la direction axiale de la turbine.

4. Moteur à turbine à gaz équipé d'une turbine selon l'une quelconque des revendications 1 à 3.

## Claims

1. A gas turbine comprising: a high pressure (HP) turbine (40); a low pressure (LP) turbine (50) with a plurality of moving wheels (56) alternating with nozzles (52), the moving wheels of the LP turbine rotating in a direction opposite to the direction of rotation of the moving wheel of the HP turbine; and an inter-turbine casing (60) having inner and outer casing walls (62, 64) defining a stream passage between the HP and LP turbines with arms (68) extending across the passage between the inner and outer casing walls;
the gas turbine being **characterized in that** the arms (68) of the inter-turbine casing are faired and the inter-turbine casing (60) connects the output of the HP turbine (40) directly with the first moving wheel (56) of the LP turbine (50), whereby the stream is not deflected between the outlet from the HP turbine (40) and the first moving wheel (56₁) of the LP turbine (50).

2. A gas turbine according to claim 1, **characterized in that** the HP turbine (40) is designed to deliver a stream that gyrates in the inter-turbine casing (60).

3. A gas turbine according to claim 2, **characterized in that** the general direction of the stream exiting the HP turbine (40) forms an angle of not less than 20° relative to the axial direction of the turbine.

4. A gas turbine engine fitted with a turbine according to any one of claims 1 to 3.

## Patentansprüche

1. Gasturbine umfassend: eine Hochdruck (HD)-Turbine (40); eine Niederdruck (ND)-Turbine (50), die eine Vielzahl von mit Leiträdern (52) abwechselnden Laufrädern (56) hat, wobei die Laufräder der ND-Turbine eine zu derjenigen des Laufrades der HD-Turbine entgegengesetzte Drehrichtung aufweisen; sowie ein Zwischenturbinengehäuse (60), das eine innere (62) und eine äußere (64) Gehäusewand, die einen Strömungsdurchgang zwischen den HD- und ND-Turbinen definieren, und Arme (68), die sich in dem Durchgang zwischen der inneren und der äußeren Gehäusewand erstrecken, aufweist,
**dadurch gekennzeichnet, daß** die Arme (68) des Turbinenzwischengehäuses stromlinienförmig sind und das Turbinenzwischengehäuse (60) den Ausgang der HD-Turbine (40) direkt mit dem ersten Laufrad (56) der ND-Turbine (50) verbindet, so daß der Strom nicht zwischen dem Ausgang der HD-Turbine (40) und dem ersten Laufrad (56) der ND-Turbine (50) ausgerichtet wird.

2. Gasturbine nach Anspruch 1, **dadurch gekennzeichnet, daß** die HD-Turbine (40) ausgelegt ist, einen kreisenden Strom in das Turbinenzwischengehäuse (60) zu liefern.

3. Gasturbine nach Anspruch 2, **dadurch gekennzeichnet, daß** die allgemeine Richtung des Stroms am Ausgang der HD-Turbine (40) einen Winkel von wenigstens gleich 20° gegenüber der axialen Richtung der Turbine bildet.

4. Gasturbinentriebwerk, das mit einer Turbine nach einem der Ansprüche 1 bis 3 ausgestattet ist.
